# EUROPEAN PATENT SPECIFICATION

(11) **EP 2 617 993 B1**
(45) Date of publication and mention of the grant of the patent: **15.08.2018**
(21) Application number: 13152254.2
(22) Date of filing: 22.01.2013
(51) Int. Cl.: F03D 7/04, F03D 17/00

(54) **Wind turbine generator and operation method for the same**
Windturbinengenerator und Betriebsverfahren dafür
Génératrice d'éolienne et son procédé de fonctionnement

(30) Priority: 23.01.2012 JP 2012011017
(43) Date of publication of application: 24.07.2013
(73) Proprietor: MHI Vestas Offshore Wind A/S, 8200 Aarhus N (DK)
(72) Inventor: Koyanagi, Takuya, TOKYO, 108-8215 (JP)
(74) Representative: Intès, Didier Gérard André

(56) References cited:
- EP-B1- 1 597 592
- US-A1- 2006 179 934
- US-A1- 2011 037 970

## Description

### [Technical Field]

The present invention relates to a wind turbine generator and an operation method of the wind turbine generator, and in particular to a wind turbine generator which is capable of an operation control based on a wind speed at a distant forward position.

### [BACKGROUND ART]

In recent years, from a perspective of preserving the environment, it is becoming popular to use a wind turbine generator utilizing wind power which generates electric power using wind in a form of renewable energy. Generally, in a wind turbine generator, a rotor formed by blades and a hub receives wind to rotate a main shaft connected to the rotor and the rotation of the main shaft is increased by a gearbox and inputted to a generator to generate electric power in the generator.

The wind speed is not uniform in a plane (a rotor rotation plane) formed by a moving path of a blade during rotation of the rotor and thus loads acting on the blades are different from one blade to another, resulting in unbalanced wind load acting on the rotor. Further, the wind turbine generator is becoming larger from the perspective of profitability and the wind load acting on the blade tends to increase due to the increased size of the wind turbine generator.

Therefore, each part of the wind turbine generator, such as a main shaft bearing and a gearbox, is subjected to unbalanced and high load and this is responsible for short lifetime of each part of the wind turbine generator.

In view of this, it is desirable to apply the load evenly on each blade by adjusting the pitch angle of each blade independently using a pitch drive unit.

The pitch angle adjustment is started by the pitch drive after the wind reaches the blade. However this causes a time lag between the start of the pitch angle adjustment and completion of the pitch angle adjustment. Thus, it is difficult to perform the pitch angle adjustment so as to follow temporal change of the wind speed without a time lag.

Therefore, to equalize the load acting on each blade, it is desirable to obtain a speed of the wind the rotor is about to receive and to control the pitch angle before the wind actually reaches the rotor.

Further, given the speed of the wind, the rotor is about to receive can be obtained, it is possible to drastically reduce the extreme load on each blade due to gust.

It is know that the rotation speed of the rotor at which a power coefficient CP is maximum, varies depending the wind speed. Thus, from the perspective of improving efficiency of the wind turbine generator, it is desirable to obtain the speed of the wind the rotor is about to receive and to perform the operation control of the wind turbine generator before the wind reaches the rotor.

In view of this, there is an attempt to measure the wind speed at a forward position distant from the wind turbine generator (i.e. the speed of the wind the rotor is going to receive in the future) and to use the measure wind speed to perform the operation control of the wind turbine generator.

Further, the wind speed at the forward position is measurable using a detector called LIDAR, Light Detection And Ranging. The LIDAR is a device for measuring a wind speed in a distant position. Typically, the LIDAR operates by illuminating the distant position using a laser beam, by detecting a scattered light from aerosols in the atmosphere at the distant position and finally by measuring the wind speed at the distant position based on the frequency shift (Doppler shift) between the laser beam and the scattered light.

For instance, US7950901 and US7281891 describe how to adjust the pitch angle of each blade independently based on the wind speed at the forward position in front of the wind turbine generator, which has been measured by the LIDAR attached to the hub, and to equalize the wind load acting on the rotor.

Further, US6320272 proposes an operation control method for a wind turbine generator by adjusting the pitch angle of the blade so as to achieve a desired power coefficient Cp, based on the wind speed at the forward position, which has been measured by a measuring apparatus attached to the nacelle.

As described in US7950901, US7281891 and US6320272, a forward anemometer such as LIDAR is attached to the nacelle or the hub so as to always measure the wind speed at the forward position in front of the rotor even when turning of the nacelle is controlled to follow the wind direction.

### [Citation List]

### [Patent Literature]

[PTL 1]
   US7950901
[PTL 2]
   US7281891
[PTL 3]
   US6320272

US 2011/037970 A1 discloses an example of laser Doppler velocimeters for measuring the velocity of wind or solid objects.

### [SUMMARY]

### [Technical Problem]

In the case of attaching the forward anemometer such as LIDAR to the nacelle or the hub as described in US7950901, US7281891 and US6320272, the forward anemometer is displaced due to deflection or vibration of the tower and thus measures the wind speed at a position different than originally intended. Particularly, in the case of a floating wind turbine, the entire wind turbine inclines or floats up and down as it is affected by waves, tides and wind load acting on the rotor and the tower. Thus, the forward anemometer attached to the nacelle or the hub is displaced significantly, resulting in a big shift of the actual position where the anemometer has measured the wind speed from the originally-intended position.

As a result, in the operation control method described in US7950901, US7281891 and US6320272, it is difficult to see intended benefits such as the wind load acting evenly on the rotor and improved operation efficiency of the wind turbine generator.

In view of the above issues, it is an object of the present invention to provide a wind turbine generator and an operation control method for the wind turbine generator, that can effectively enjoy benefits of an operation control based on the wind speed at the forward position distant from the wind turbine generator.

### [Solution to Problem]

An operation control method for a wind turbine generator comprising a forward anemometer, according to a first aspect of the present invention, the method as defined in claim 1 comprising steps of:
measuring a wind speed at a forward position distant from the wind turbine generator by means of the forward anemometer;
determining, based on at least displacement of the forward anemometer, the forward position at which the wind speed is measured by the forward anemometer; and
controlling the wind turbine generator based on the measured wind speed and the determined forward position.

According to the above operation control method, the forward position is determined based on at least displacement of the forward anemometer and the wind turbine generator is controlled based on the measured wind speed and the determined forward position. Therefore, it is possible to effectively enjoy benefits of the operation control based on the wind speed at the forward position regardless of the displacement of the forward anemometer.

Especially in the case of an offshore floating wind turbine, the entire wind turbine inclines or floats up and down under the influence of waves, tides or the wind load acting on the rotor and the tower. As a result, the forward anemometer is significantly displaced compared to the onshore wind turbine or the offshore fixed-foundation wind turbine and thus it is particularly difficult due to the displacement of the forward anemometer to enjoy the benefits of the operation control performed based on the wind speed at the forward position as intended. Therefore, it is extremely advantageous, even in the case of the offshore floating wind turbine, to be able to effectively enjoy the benefits of the operation control based on the wind speed at the forward position by adopting the above-described operation control method for the wind turbine.

In the above operation control method for the wind turbine generator, in the step of determining the forward position, the forward position may be determined based on the displacement of the forward anemometer and a measuring direction of the forward anemometer.

By determining the forward position where the wind speed is measured, based on the measuring direction of the forward anemometer in addition to the displacement of the forward anemometer, it is possible to improve precision of determining the forward position where the wind speed is actually measured.

Further, in the case of determining the forward position based on the displacement of the forward anemometer and the measuring direction,
the wind turbine generator may be an offshore floating wind turbine, and
the operation control method may further comprise a step of determining the measuring direction of the forward anemometer based on an inclination angle of a tower of the wind turbine generator relative to a vertical direction.

In the case of the offshore floating wind turbine, the entire wind turbine inclines or floats up and down as it is affected by waves, tides and wind load acting on the rotor and the tower but deflection of the tower is relatively small. Therefore, affect on displacement of the anemometer by deflection of the tower is negligible and thus it is assumed that the change of the measuring direction of the forward anemometer is caused solely by inclination of the tower. With this information, it is possible to determine the measuring direction of the forward anemometer based on the inclination angle of the tower in the case of the offshore floating wind turbine.

Alternatively, in the case of determining the forward position based on the displacement of the forward anemometer and the measuring direction, the above operation control method may further comprise steps of:
measuring an inclination amount of the forward anemometer by means of an angular speed sensor; and
obtaining the measuring direction of the forward anemometer from the inclination amount of the forward anemometer.

As a result, it is possible to obtain the measuring direction of the forward anemometer for various types of wind turbine generators such as the offshore floating wind turbine, the offshore fixed-foundation wind turbine and the onshore wind turbine. Further, a six-axis motion sensor capable of simultaneously measuring acceleration in XYZ directions and angular speed around XYZ axes may be used as the "angular speed sensor" for measuring the inclination amount of the forward anemometer.

In the above operation control method for the wind turbine generator, an attitude of the forward anemometer may be maintained constant regardless of the displacement of the forward anemometer.

As a result, the measuring direction of the forward anemometer is maintained constant and thus the forward position where the wind speed is measured can be precisely determined based on the displacement of the forward anemometer alone. Further, differently from the case where the attitude of the forward anemometer possibly changes, the measuring direction of the forward anemometer never changes. The detection error of displacement of the forward anemometer dominates error in determining the forward position where the wind speed is actually measured. Therefore, the forward measurement position where the wind speed is actually measured can be determined with high precision and it is possible to enjoy benefits of the operation control performed based on the wind speed at the forward position effectively.

In the above operation control method for the wind turbine generator, the displacement of the forward anemometer may be obtained from a detection result of a displacement detection unit including an acceleration sensor or a GPS receiver.

In this case, the forward anemometer and the displacement detection unit are attached to the nacelle or the hub of the wind turbine generator. Based on the displacement of the nacelle or the hub detected by the displacement detection unit, the displacement of the forward anemometer may be obtained. As a result, the displacement of the forward anemometer may be indirectly obtained from the detection result of the displacement detection unit. Alternatively, the displacement detection unit may be attached to the forward anemometer so as to directly measure the displacement of the forward anemometer by means of the displacement detection unit.

Moreover, in the above operation control method for the wind turbine generator, the displacement of the forward anemometer may be estimated from a known periodic displacement of the forward anemometer.

The vibration of the tower structure of the wind turbine generator is generally periodic. Thus, by measuring in advance the period displacement of the forward anemometer, it is possible to estimate the displacement of the forward anemometer from the periodic displacement. As a result, it is no longer necessary to constantly monitor the displacement of the forward anemometer by means of the displacement detection unit (e.g. the acceleration sensors and a GPS receiver).

In the above operation control method for the wind turbine generator, in the step of measuring the wind speed, the wind speed in a region at the forward position may be selectively measured, the region corresponding to a blade of the wind turbine generator.

By selectively measuring minimum wind speed information (wind speed in the region corresponding to the blade) needed to perform the operation control of the wind turbine generator based on the future wind speed, even a forward anemometer having low sampling frequency can be used.

A wind turbine generator according to the first aspect of the present invention, the wind turbine generator as defined in claim 9 comprising:
a forward anemometer for measuring a wind speed at a forward position distant from the wind turbine generator;
a measurement-position determination unit for determining, based on at least displacement of the forward anemometer, the forward position where the wind speed is measured by the forward anemometer; and
an operation control unit for controlling the wind turbine generator based on the wind speed measured by the forward anemometer and the forward position determined by the measurement-position determination unit.

According to the above wind turbine generator, the measurement-position determination unit determines the forward position where the wind speed is measured based on at least displacement of the forward anemometer and the operation control unit controls the wind turbine generator based on the wind speed measured at the forward position and the determined forward position. Therefore, even when the forward anemometer is displaced, it is possible to enjoy benefits of the operation control performed based on the wind speed at the forward position effectively.

Particularly, in the case of the offshore floating wind turbine, the entire wind turbine inclines or floats up and down as it is affected by waves, tides and wind load acting on the rotor and the tower. In the offshore floating wind turbine, the displacement of the forward anemometer is significant compared to the onshore wind turbine or the offshore fixed-foundation wind turbine. Therefore, it is particularly difficult to due to the displacement of the forward anemometer to enjoy the benefits of the operation control performed based on the wind speed at the forward position as intended. Therefore, it is extremely advantageous by adopting the above structure of the wind turbine generator, even in the case of the offshore floating wind turbine, to be able to effectively enjoy the benefits of the operation control based on the wind speed at the forward position.

In the above wind turbine generator, the measurement-position determination unit may be configured to determine the forward position, based on the displacement of the forward anemometer and a measuring direction of the forward anemometer.

By determining the forward position based on not only the displacement of the forward anemometer but also the measuring direction of the forward anemometer, precision of determining the forward position can be improved. As a result, it is possible to enjoy benefits of the operation control performed based on the wind speed at the forward position effectively.

Further, in the case where the measurement-position determination unit determines the forward position based the displacement of the forward anemometer and the measuring direction of the forward anemometer,
the wind turbine generator may be an offshore floating wind turbine comprising a nacelle provided on a tower supported by a floating structure, and
the wind turbine generator may further comprise:
a pair of acceleration sensors provided in at least one of the floating structure, the tower or the nacelle, the pair of acceleration sensors being arranged at different heights; and
a measuring-direction calculation unit for calculating the measuring direction of the forward anemometer from a measurement result of the pair of acceleration sensors.

In the case of the offshore floating wind turbine, the entire wind turbine inclines or floats up and down as it is affected by waves, tides and wind load acting on the rotor and the tower but deflection of the tower is relatively small. Therefore, affect on displacement of the anemometer by deflection of the tower is negligible and thus it is assumed that the change of the measuring direction of the forward anemometer is caused solely by inclination of the tower. With this information, in the offshore floating wind turbine, the tower inclination angle can be obtained from the measurement result of the pair of acceleration sensors provided in at least one of the floating structure, the tower or the nacelle, the pair of acceleration sensors being arranged at different heights and finally the measuring direction of the forward anemometer can be obtained.

Alternatively, in the case where the measurement-position determination unit determines the forward position based the displacement of the forward anemometer and the measuring direction of the forward anemometer, the wind turbine generator may further comprise an angular speed sensor for measuring an inclination amount of the forward anemometer; and a measuring-direction calculation unit for calculating the measuring direction of the forward anemometer from a measurement result of the angular speed sensor.

As a result, it is possible to obtain the measuring direction of the forward anemometer for various types of wind turbine generators such as the offshore floating wind turbine, the offshore fixed-foundation wind turbine and the onshore wind turbine.

The above wind turbine generator may further comprise an attitude maintaining unit for maintaining an attitude of the forward anemometer regardless of the displacement of the forward anemometer.

As a result, the measuring direction of the forward anemometer is maintained constant and thus the forward position where the wind speed is measured can be precisely determined based on the displacement of the forward anemometer alone. Further, differently from the case where the attitude of the forward anemometer possibly changes, the measuring direction of the forward anemometer never changes. The detection error of displacement of the forward anemometer dominates error in determining the forward position where the wind speed is actually measured. Therefore, the forward measurement position where the wind speed is actually measured can be determined with high precision and it is possible to enjoy benefits of the operation control performed based on the wind speed at the forward position effectively.

The above wind turbine generator may further comprise a displacement detection unit for detecting the displacement of the forward anemometer, the displacement detection unit including an acceleration sensor or a GPS receiver. In this case, the forward anemometer and the displacement detection unit are attached to the nacelle or the hub of the wind turbine generator. Based on the displacement of the nacelle or the hub detected by the displacement detection unit, the displacement of the forward anemometer may be obtained. As a result, the displacement of the forward anemometer may be indirectly obtained from the detection result of the displacement detection unit. Alternatively, the displacement detection unit may be attached to the forward anemometer so as to directly measure the displacement of the forward anemometer by means of the displacement detection unit.

The above wind turbine generator may further comprise a memory unit for storing a periodic displacement of the forward anemometer in advance, and the displacement of the forward anemometer may be estimated from the periodic displacement stored in the memory unit.

The vibration of the tower structure of the wind turbine generator is generally periodic. Thus, by storing the period displacement of the forward anemometer in the memory unit beforehand, it is possible to estimate the displacement of the forward anemometer from the periodic displacement. As a result, it is no longer necessary to constantly monitor the displacement of the forward anemometer by means of the displacement detection unit (e.g. the acceleration sensors and a GPS receiver).

The above wind turbine generator may further comprise a blade and an anemometer controller for controlling the forward anemometer so as to selectively measure a wind speed in a region at the forward position, the region corresponding to the blade.

By selectively measuring minimum wind speed information (wind speed in the region corresponding to the blade) by controlling the forward anemometer in the above manner, even a forward anemometer having low sampling frequency can be used.

A method for controlling a wind turbine generator comprising a forward anemometer, according to a second aspect of the present invention, comprises steps of:
measuring a wind speed at a forward position distant from the wind turbine generator by means of the forward anemometer;
maintaining the forward position where the wind speed is measured constant regardless of the displacement of the forward anemometer; and controlling the wind turbine generator based on the measured wind speed.

According to the above method for controlling the wind turbine generator, the forward position where the wind speed is measured is maintained constant regardless of the displacement of the forward anemometer. Thus, even when the forward anemometer is displaced, it is possible to effectively enjoy benefits of the operation control performed based on the wind speed at the forward position.

A wind turbine generator according to the second aspect of the present invention may comprised
a forward anemometer for measuring a wind speed at a forward position distant from the wind turbine generator; and
an operation control unit for controlling operation of the wind turbine generator based on the wind speed measured by the forward anemometer,
the forward position where the wind speed is measured by the forward anemometer may be maintained constant regardless of the displacement of the forward anemometer.

According to this wind turbine generator, the forward position where the wind speed is measured by the forward anemometer is maintained constant regardless of the displacement of the forward anemometer. Thus, even when the forward anemometer is displaced, it is possible to effectively enjoy benefits of the operation control performed based on the wind speed at the forward position.

### [Advantageous Effects]

According to the first aspect of the present invention, the forward position where the wind speed is measured is determined based on at least displacement of the forward anemometer and operation of the wind turbine generator is controlled based on the measured wind speed and the determined forward position. Therefore, even when the forward anemometer is displaced, it is possible to enjoy benefits of the operation control performed based on the wind speed at the forward position effectively.

Further, according to the second aspect of the present invention, the forward position where the wind speed is measured by the forward anemometer is maintained constant. Thus, even when the forward anemometer is displaced, it is possible to effectively enjoy benefits of the operation control performed based on the wind speed at the forward position.

### [BRIEF DESCRIPTION OF DRAWINGS]

[FIG.1] FIG.1 is an illustration of a general structure of a wind turbine generator according to a first embodiment.
[FIG.2] FIG.2 is an explanatory diagram of how to determine a forward position where the wind speed is actually measured by a forward anemometer in the case of an offshore floating wind turbine.
[FIG.3] FIG.3 is a block diagram illustrating the operation control of the wind turbine generator in the case of determining the forward position according to the method described in FIG.2.
[FIG.4] FIG.4 is an explanatory diagram of how to determine the forward position where the wind speed is actually measured by the forward anemometer in the case of an onshore wind turbine or an offshore fixed-foundation wind turbine.
[FIG.5] FIG.5 is a block diagram illustrating the operation control of the wind turbine generator in the case of determining the forward position where the wind speed is actually measured according to the method described in FIG.4.
[FIG.6] FIG.6 is an illustration of a general structure of the wind turbine generator according to a second embodiment.
[FIG.7] FIG.7 is an oblique perspective view of an attitude maintaining unit of the wind turbine generator illustrated in FG.6.
[FIG.8] FIG.8 is an illustration of another example of the attitude maintaining unit of the wind turbine generator illustrated in FIG.8.
[FIG.9] FIG.9 is an explanatory diagram of how to determine the forward position where the wind speed is actually measured by the forward anemometer in the case of an offshore floating wind turbine.
[FIG.10] FIG.10 is an explanatory diagram of how to determine the forward position where the wind speed is actually measured by the forward anemometer in the case of an onshore wind turbine or an offshore fixed-foundation wind turbine.
[FIG.11] FIG.11 is an illustration of a general structure in the case where the wind turbine generator is the offshore floating wind turbine, according to a third embodiment.
[FIG.12] FIG.12 is an illustration of a general structure in the case where the wind turbine generator is the onshore wind turbine or the offshore fixed-foundation wind turbine, according to the third embodiment.
[FIG.13] FIG.13 is a block diagram illustrating the operation control of the wind turbine generator according to the third embodiment.
[FIG.14] FIG.14 is an illustration of an example of the measurement area where the wind speed measurement is performed by the forward anemometer.

### [DETAILED DESCRIPTION]

Embodiments of the present invention will now be described in detail with reference to the accompanying drawings. It is intended, however, that unless particularly specified in these embodiments, dimensions, materials, shape, its relative position and the like shall be interpreted as illustrative only and not limitative of the scope of the present invention.

### (FIRST EMBODIMENT)

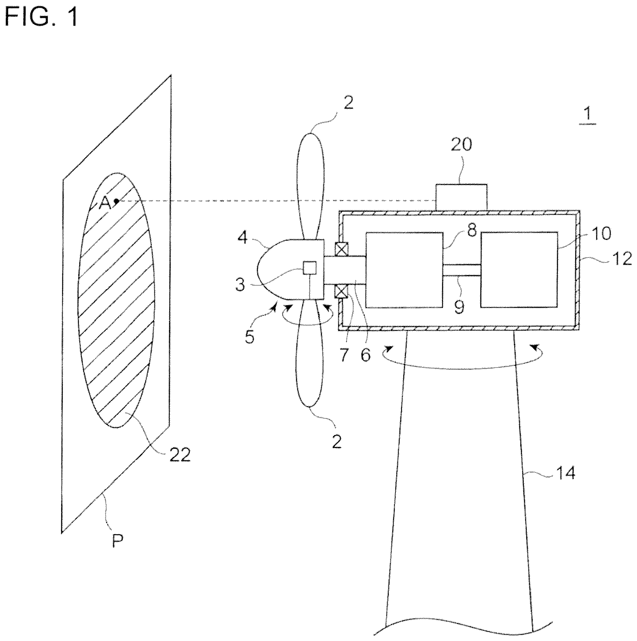

FIG.1 is an illustration of a general structure of a wind turbine generator according to a first embodiment. As illustrated in the drawing, a wind turbine generator 1 is provided with at least one blade 2, a hub (a rotor hub) 4 to which the blade 2 is mounted, a main shaft 6 connected to the hub 4, a gearbox 8 for accelerating rotation of the main shaft 6, and a generator 10 connected to an output shaft 9 of the gearbox 8. Further, the main shaft 6 is rotatably supported by a nacelle 12 via a main bearing 7 of the main shaft 6.

Upon reception of the wind by the blade 2, a rotor 5 formed by the blade 2 and the hub 4 rotates. Once the rotor 5 rotates, the main shaft 6 rotates with the rotor 5. The rotation of the main shaft 6 is accelerated by the gearbox 8 and then inputted to the generator 10 via the output shaft 9. As a result, electric power is generated by the generator 10.

Further, any type of gearbox may be used as the gearbox 8, such as a gearbox formed by gears and a gearbox formed by a hydraulic transmission having a hydraulic pump and a hydraulic motor. Alternatively, the rotation of the main shaft 6 may be directly transmitted to the generator without the gearbox 8.

In the wind turbine generator I, a forward anemometer 20 is provided to measure a wind speed at a forward position A distant from the rotor 5.

The principle of wind speed measurement by the forward anemometer 20 may be to obtain the wind speed from the frequency shift (Doppler shift) between the electromagnetic wave (e.g. laser beam) emitted to the forward position A and the scattered light from aerosols in the atmosphere at the position. There is LIDAR as one form of the forward anemometer 20.

The forward anemometer 20 may be attached to the nacelle as illustrated in FIG.1. Alternatively, the forward anemometer 20 may be attached to the hub 4. As a result, even in the case where the nacelle 12 is controlled to turn in the direction of arrow in FIG.1 so as to follow the wind direction, it is easy to measure the wind speed at the forward position in front of the rotor 5.

Further, the wind speed measurement using the forward anemometer 20 is performed in a plurality of regions in a measurement area 22 within a plane P in front of the rotor 5 so as to obtain wind speed distribution in the measurement area 22.

The wind speed at the forward position A, measured by the forward anemometer is an estimated wind speed that will eventually reach the rotor 5 after a certain amount of time. The wind speed (future wind speed) measured by the forward anemometer 20 is used to control operation of the wind turbine generator 1 before the wind reaches the rotor 5.

For instance, based on the wind speed measured by the forward anemometer 20, an actuator 3 (e.g. a hydraulic cylinder, an electric motor) provided in the hub 4 for pitch angle adjustment of the blade 2 may be controlled so as to turn the blade 2 in the direction of arrow n FIG.1, thereby adjusting the pitch angle of the blade 2. Alternatively, based on the wind speed measured by the forward anemometer 20, each part of the wind turbine generator (e.g. a power converter unit provided between the generator 10 and the grid) may be controlled so as to rotate the rotor 5 at the rotation speed at which the power coefficient Cp becomes maximum.

In the wind turbine generator 1, the rotor 5 and the tower 14 is subjected to the wind load (an aerodynamic force) which causes deflection and vibration of the tower 14. As a result, the forward anemometer 20 is displaced. Especially in the case where the wind turbine generator 1 is an offshore floating wind turbine configured so that a nacelle is provided on a tower supported by a floating structure, vibration cycle of the forward anemometer is small and its amplitude is large. Further, unlike the wind turbine generator having a tower installed on the ground or the ocean floor, the floating wind turbine inclines or floats up and down under the influence of waves, tides or the wind load acting on the rotor 5 and the tower 14. As a result, the forward anemometer 20 is significantly displaced in the vertical direction.

In view of this, in this embodiment, when performing the operation control of the wind turbine generator 1 based on the wind speed at the forward position, the forward position where the wind speed is actually measured is determined and the determined forward position is used for the operation control of the wind turbine generator.

The process of determining the forward position where the where the wind speed is actually measured is described below in two cases: the case where the wind turbine generator 1 is the floating wind turbine; and the case where the wind turbine generator is an onshore wind turbine or an offshore fixed-foundation wind turbine.

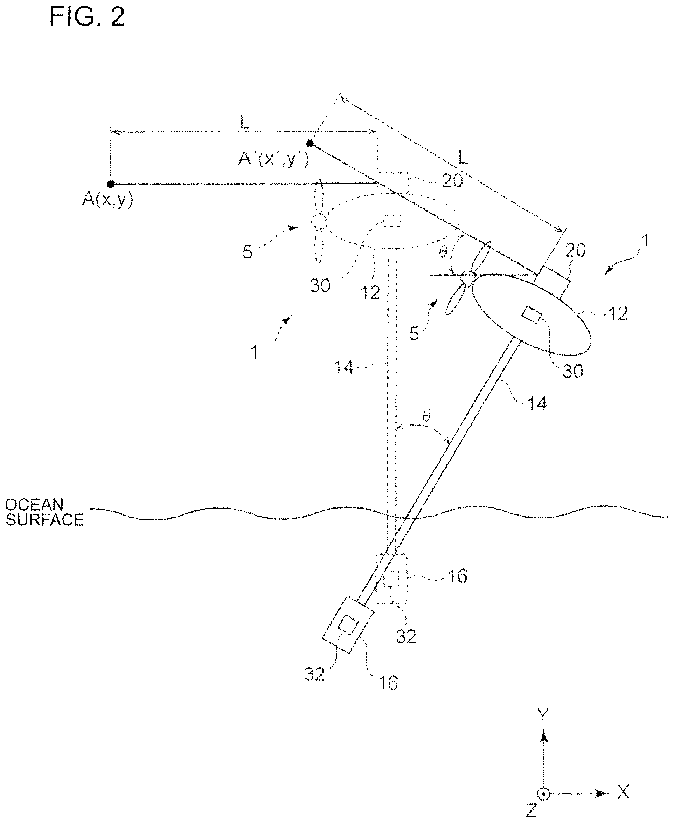

FIG.2 is an explanatory diagram of how to determine the forward position where the wind speed is actually measured by the forward anemometer 20. In FIG.2, the actual state of the wind turbine generator 1 is illustrated by a solid line and a standard state of the wind turbine generator 1 is illustrated by a broken line.

In the case where the wind turbine generator 1 is an offshore floating wind turbine, as shown in FIG.2, deflection of the tower 14 is small but the entire wind turbine inclines and floats up and down under the influence of waves and tides and due to the wind load acting on the rotor 5 and the tower 14. Therefore, an actual position A' (the forward position) where the wind speed is actually measured by the forward anemometer 20 is displaced from an intended position where the wind speed is intended to be measured in the standard state.

The displacement of the forward anemometer 20 with respect to the standard state can be obtained from displacement of the nacelle 12 obtained by integrating acceleration of the nacelle 12 measured by a first acceleration sensor attached to the nacelle 12.

Further, the first acceleration sensor 30 may be attached anywhere as long as it is capable of obtaining the displacement of the forward anemometer 20. The first acceleration sensor 30 may be attached to the hub or an upper part of the tower 14, or may be directly attached to the forward anemometer 20.

An approximate position of a fulcrum about which the wind turbine generator 1 inclines is substantially determined from detailed information of the wind turbine generator 1 regarding height of the tower 14, weight of the nacelle 12, an anchor state of the floating structure 16, etc. Thus, once the displacement of the nacelle 12 is obtained from the measurement result of the first acceleration sensor 30, an inclination angle 0 of the tower 14 relative the vertical direction in the actual state indicated by the solid line in FIG.2 can be approximately determined. Further, in the case of the offshore floating wind turbine, deflection of the tower 14 is negligible and thus the inclination angle 0 of the tower 14 approximately coincides with a measurement angle of the forward anemometer 20. Therefore, not just the displacement of the nacelle 12 but also an approximate measurement angle 0 of the forward anemometer 20 can be obtained from the measurement result of the first acceleration sensor 30.

The measurement angle 0 of the forward anemometer 20 is an angle of the measuring direction of the forward anemometer 20 and is formed by the horizontal direction and a line extending between the forward position A' where the wind speed is actually measured and the forward anemometer 20.

Alternatively, in order to calculate the measurement angle 0 of the forward anemometer 20 with high precision, the inclination angle 0 of the tower may be obtained using a second acceleration sensor 32 placed at a level different from the first acceleration sensor 30. More specifically, the inclination angle 0 of the tower 14 may be obtained based on the position of the first acceleration sensor obtained by integrating the acceleration measured by the first acceleration sensor 30 and the position of the second acceleration sensor 32 obtained by integrating the acceleration measured by the second acceleration sensor 32. As a result, it is possible to precisely calculate the measurement angle 0 formed by the extending line and the horizontal direction. The extending line extends between the actual forward position A' and the forward anemometer 20.

From the perspective of improving precision of calculating the measurement angle 0 indicating the measuring direction of the forward anemometer 20, the second acceleration sensor 32 may be placed at a level substantially lower than the first acceleration sensor 30. For instance, in the case where the first acceleration sensor 30 is attached to the upper end of the nacelle 12, the hub 4 or the tower 14, the second acceleration sensor 32 may be installed in the floating structure 16 or in a lower end of the tower 14.

In the case illustrated in FIG.2, the second acceleration sensor 32 is installed in the floating structure 16.

Further, a coordinate (x', y') of the forward position A' where the wind speed is actually measured can be obtained from the displacement of the forward anemometer 20, the measurement angle 0 of the forward anemometer 20 and the known measuring distance L of the forward anemometer 20.

For convenience of explanation, in the case illustrated in FIG.2, the forward anemometer 20 is displaced within a XY plane (a plane formed along a vertical direction passing through a central axis of rotation of the rotor 5 of the wind turbine generator). In reality, the forward anemometer 20 is possibly displaced three-dimensionally in an arbitrary path in XYZ directions including Z direction perpendicular to the XY plane. However, the method of determining the forward position A' as described above in reference to FIG.2 is similarly applicable to the case where the forward anemometer 20 is three-dimensionally displace in XYZ directions.

In the case where the forward anemometer 20 is three-dimensionally displaced in XYZ directions, the three-dimensional displacement of the forward anemometer and a three-dimensional inclination angle of the tower 14 are obtained. In this case, a three-axis accelerometer for measuring three-axis acceleration in XYZ directions may be used as the first acceleration sensor 30 and the second acceleration sensor 32.

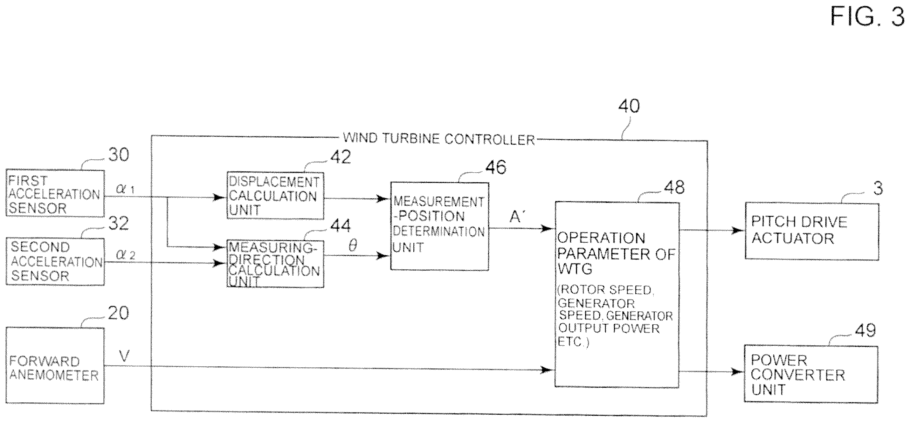

FIG.3 is a block diagram illustrating the operation control of the wind turbine generator 1 in the case of determining the forward position A' where the wind speed is actually measured according to the method described in FIG.2.

As illustrated in FIG.3, the measurement results of the forward anemometer 20, the first acceleration sensor 30 and the second acceleration sensor 32 are sent to a wind turbine controller 40 to be used for the operation control of the wind turbine generator 1.

More specifically, acceleration α₁ in XYZ directions (acceleration of the nacelle 12) measured by the first acceleration sensor 30 is sent to a displacement calculation unit 42 of the wind turbine controller 40 and the displacement of the forward anemometer 20 is calculated in the displacement calculation unit 42. The acceleration α₁ in XYZ directions of the nacelle 12 is sent with acceleration α₂ in XYZ directions measured by the second acceleration sensor 32 to a measuring-direction calculation unit 44 of the wind turbine controller 40 and then in the measuring-direction calculation unit 44 the measurement angle 0 indicating the measuring direction of the forward anemometer 20 is calculated. In the case where the measurement angle 0 indicating the measuring direction of the forward anemometer 20 is calculated from the acceleration α₁ of the nacelle 12 and detail information about the wind turbine generator, the second acceleration sensor 32 may be omitted.

A measurement-position determination unit 46 of the wind turbine controller 40 determines the forward position A' where the wind speed is actually measured, using the displacement of the forward anemometer 20 obtained by the displacement calculation unit 42 and the measurement angle 0 of the forward anemometer 20 obtained by the measuring-direction calculation unit 44. More specifically, a coordinate (x', y', z') of the forward position A' is obtained by the measurement-position determination unit 46.

Further, an operation control unit 48 of the wind turbine controller 40 controls operation of the wind turbine generator 1 based on the wind speed V measured by the forward anemometer 20 and the forward position A' determined by the measurement-position determination unit 46. More specifically, the operation control unit 48 may control the actuator 3 based on the wind speed V at the forward position A', before the wind reaches the rotor 5, so as to adjust the pitch angle of each blade 2 independently. Alternatively, the operation control unit 48 may control operation of the wind turbine generator 1 based on at least the wind speed V at the forward position A', before the wind reaches the rotor 5, so as to rotate the rotor 5 at the rotation speed at which the desired power coefficient Cp can be obtained. Further, to control the rotation speed of the rotor 5, the torque of the generator 10 may be adjusted by controlling a power converter unit. 49 provided between the generator 10 and the grid. In this case, the power converter unit 49 may be AC-DC-AC converter.

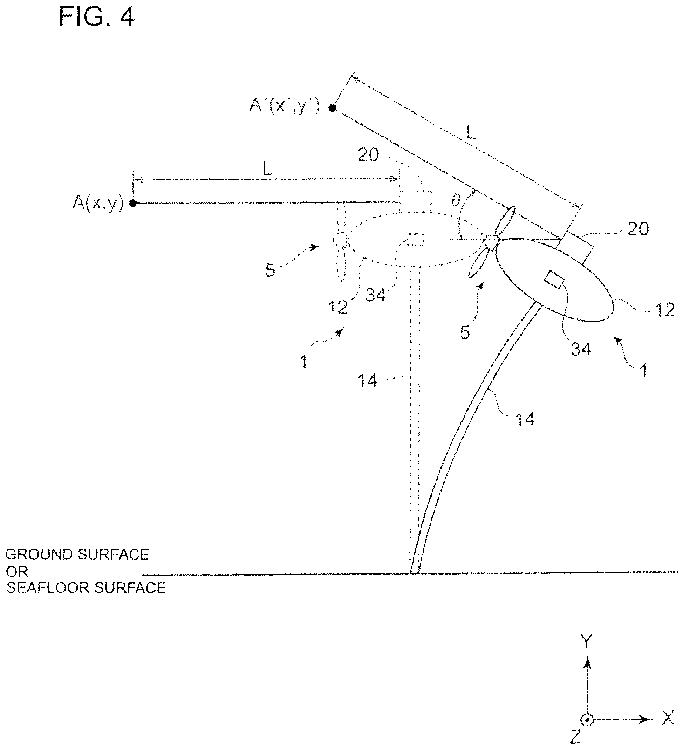

FIG.4 is an explanatory diagram of how to determine the forward position where the wind speed is actually measured by the forward anemometer 20 in the case of an on-shore wind turbine or an offshore fixed-foundation wind turbine.

In the case of the onshore wind turbine or the offshore fixed-foundation wind turbine, differently from the offshore floating wind turbine, deflection of the tower 14 is a major factor of displacement of the forward anemometer 20 and similarly to the offshore floating wind turbine, there is displacement of the forward anemometer 20.

In FIG.2, the actual state of the wind turbine generator 1 is illustrated by a solid line and a standard state of the wind turbine generator 1 is illustrated by a broken line. Therefore, the position A' (the forward position) where the wind speed is actually measured by the forward anemometer is displaced from the intended position where the wind speed is intended to be measured in the standard state.

The displacement of the forward anemometer 20 can be obtained from displacement of the nacelle 12 obtained by integrating acceleration of the nacelle 12 measured by an acceleration sensor 34 attached to the nacelle 12.

Further, the acceleration sensor 34 may be attached anywhere as long as it is capable of obtaining the displacement of the forward anemometer 20. The acceleration sensor 34 may be attached to the hub 4 or an upper part of the tower 14, or may be directly attached to the forward anemometer 20.

Approximate deflection of the tower 14 is determined from detail information about the wind turbine regarding height and stiffness of the tower 14, weight of the nacelle 12, etc. Thus, once the displacement of the nacelle 12 is obtained from the measurement result of the acceleration sensor 34, an inclination amount of the forward anemometer 20 in the actual state indicated by the solid line in FIG.4 can be approximately determined. Therefore, not just the displacement of the nacelle 12 but also an approximate measurement angle θ of the forward anemometer 20 can be obtained from the measurement result of the acceleration sensor 34.

The inclination amount of the forward anemometer 20 means a rotation angle of the forward anemometer 20 about XYZ axes relative to the standard state indicated by a broken line in FIG.4.

Alternatively, in order to calculate the measurement angle 0 of the forward anemometer 20 with high precision, a six-axis motion sensor capable of simultaneously measuring acceleration in XYZ directions and angular speed around XYZ axes may be used as the acceleration sensor 34. More specifically, the displacement and measurement angle θ of the forward anemometer 20 may be calculating by integrating the acceleration and the angular speed of the nacelle 12 measured by the acceleration sensor (the six-axis motion sensor) 34.

Therefore, using the displacement of the forward anemometer 20, the measurement angle 0 of the forward anemometer and the known measuring distance L of the forward anemometer 20, it is possible to determine the forward position A' where the wind speed is actually measure.

The above method of determining the forward position A' as described in reference to FIG.4 is not limited to the case where the wind turbine generator 1 is an onshore wind turbine or an offshore fixed-foundation wind turbine but also applicable to the case where the wind turbine generator 1 is an offshore floating wind turbine.

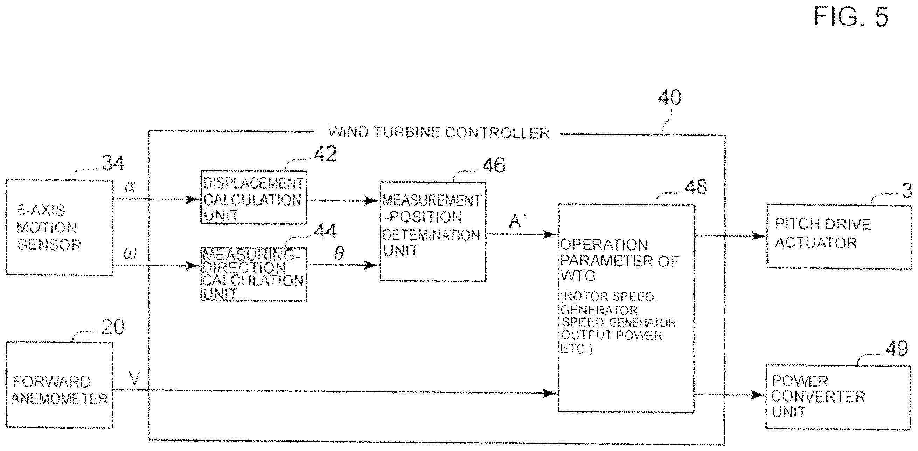

FIG.5 is a block diagram illustrating the operation control of the wind turbine generator 1 in the case of determining the forward position A' where the wind speed is actually measured according to the method described in FIG.4.

As illustrated in FIG.5, the measurement result of the forward anemometer 20 and the six-axis motion sensor 34 is sent to the wind turbine controller 40 and used for the operation control of the wind turbine generator 1.

More specifically, acceleration α in XYZ directions (acceleration of the nacelle 12) measured by the six-axis motion sensor 34 is sent to the displacement calculation unit 42 of the wind turbine controller 40 and the displacement of the forward anemometer 20 is calculated in the displacement calculation unit 42. The angular speed ω (the angular speed of the nacelle 12) about XYZ axes measured by the six-axis motion sensor 34 is sent to the measuring-direction calculation unit 44 of the wind turbine controller to and in the measuring-direction calculation unit 44 the measurement angle θ of the forward anemometer 20 is calculated.

The measurement-position determination unit 46 of the wind turbine controller 40 determines the forward position A' where the wind speed is actually measured, using the displacement of the forward anemometer 20 obtained by the displacement calculation unit 42 and the measurement angle θ of the forward anemometer 20 obtained by the measuring-direction calculation unit 44. More specifically, a coordinate (x', y', z') of the forward position A' is obtained by the measurement-position determination unit 46.

Further, the operation control unit 48 of the wind turbine controller 40 controls operation of the wind turbine generator 1 based on the wind speed V measured by the forward anemometer 20 and the forward position A' determined by the measurement-position determination unit 46. More specifically, the operation control unit 48 may control the actuator 3 based on the wind speed V at the forward position A', before the wind reaches the rotor 5, so as to adjust the pitch angle of each blade 2 independently. Alternatively, the operation control unit 48 may control operation of the wind turbine generator 1 based on the wind speed V at the forward position A', before the wind reaches the rotor 5, so as to rotate the rotor 5 at the rotation speed at which the desired power coefficient Cp can be obtained. Further, to control the rotation speed of the rotor 5, the torque of the generator 10 may be adjusted by controlling the power converter unit 49 (e.g. AC-DC-AC converter) provided between the generator 10 and the grid.

As described above, in this embodiment, the measurement-position determination unit 46 determines the forward position A' where the wind speed is actually measured based on at least the displacement of the forward anemometer 20 and then the operation control unit 48 controls operation of the wind turbine generator 1 based on the measurement result regarding the wind speed and the determined forward position A'.

Therefore, even when the forward anemometer 20 is displaced, it is still possible to effectively enjoy benefits of the operation control performed based on the wind speed V at the forward position A'. Particularly, in the case where the wind turbine generator 1 is an offshore floating wind turbine, the entire wind turbine inclines or floats up and down as it is affected by waves, tides and wind load acting on the rotor 5 and the tower 14. In the offshore floating wind turbine, the displacement of the forward anemometer 20 is significant compared to the onshore wind turbine or the offshore fixed-foundation wind turbine and thus it is particularly difficult to enjoy the benefits of the operation control performed based on the wind speed at the forward position as intended. Therefore, it is extremely advantageous, even in the case of the offshore floating wind turbine, to be able to effectively enjoy the benefits of the operation control performed based on the wind speed at the forward position by performing the operation control of the wind turbine generator 1 of this embodiment.

Further, in this embodiment, the measurement-position determination unit 46 is configured to determine the forward position A' based on the displacement of the forward anemometer 20 and the measuring direction of the forward anemometer 20 (i.e. the measurement angle θ). Therefore, the forward position A' can be determined more precisely. As a result, it is possible to effectively enjoy benefits of the operation control performed based on the wind speed measured at the forward position.

Furthermore, in this embodiment, the acceleration sensor 30, 34 is used to measure the acceleration of the forward anemometer 20 and the displacement of the forward anemometer 20 is calculated by integrating the acceleration measured by the acceleration sensor 30, 34. However, this is not limitative and any sensor may be used instead of the acceleration sensor 30, 34. For instance, a GPS receiver may be used to measure the displacement of the forward anemometer 20 in XYZ directions.

Alternatively, a memory unit (a memory) may be used to store periodic changes such as the displacement of the forward anemometer 20 in XYZ direction and the rotation amount of the forward anemometer 20 about the XYZ axes that are measured beforehand.
By retrieving the information regarding these periodic changes from the memory unit, the displacement of the forward anemometer 20 in XYZ directions and the rotation amount of the forward anemometer 20 around the XYZ axes may be estimated.

The vibration of the tower structure of the wind turbine generator is generally periodic. Thus, by measuring in advance the period changes such as the displacement of the forward anemometer 20 in XYZ direction and the rotation amount of the forward anemometer 20 about the XYZ axes, it is possible to estimate the displacement in XYX directions and the rotation amount about XYZ axes of the forward anemometer 20 from the information regarding these periodic changes. As a result, it is no longer necessary to constantly monitor the displacement or inclination amount of the forward anemometer 20 using sensors (e.g. the acceleration sensors (including the six-axis motion sensor) and GPS receiver).

### (SECOND EMBODIMENT)

The wind turbine generator according to a second embodiment is described below. The wind turbine generator of this embodiment is similar to the wind turbine generator 1 of the first embodiment except that the attitude of the forward anemometer is maintained constant. Thus, the same reference numerals are given without adding explanations for those configurations that are the same as the wind turbine generator 1 of the first embodiment and mainly the configurations that are different are from the wind turbine generator 1 are mainly explained here.

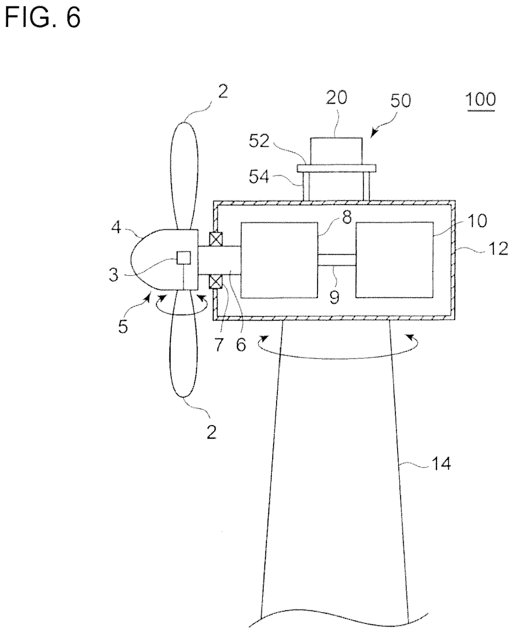

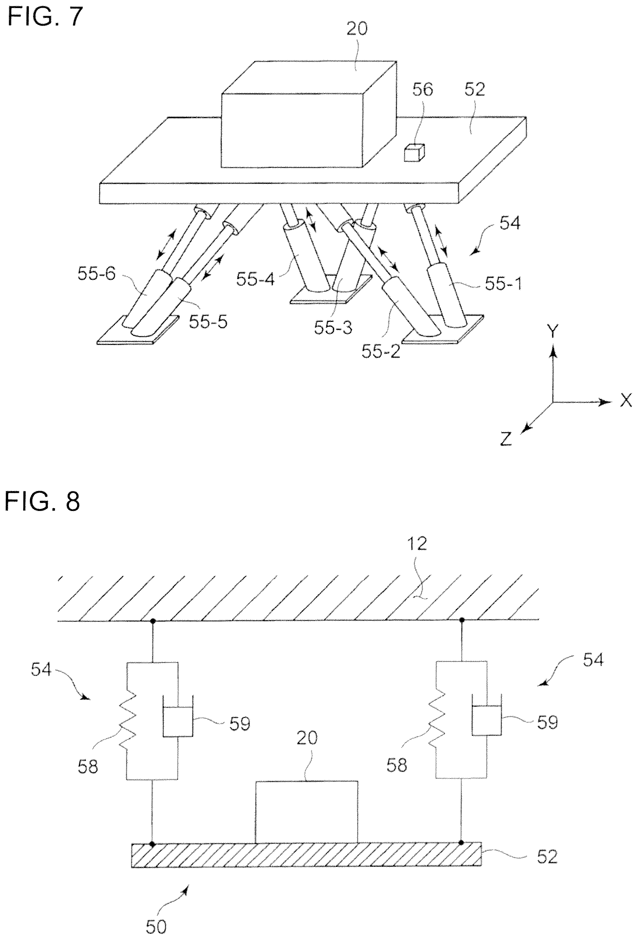

FIG.6 is an illustration of a general structure of a wind turbine generator according to the second embodiment. FIG.7 is an oblique perspective view of an attitude maintaining unit of the wind turbine generator illustrated in FG.6. FIG.8 is an illustration of another example of the attitude maintaining unit of the wind turbine generator illustrated in FIG.6.

As illustrated in FIG.6, a wind turbine generator 100 is provided with an attitude maintaining unit 50 for maintaining a constant attitude of the forward anemometer 20. The attitude maintaining unit 50 may be formed by a stage 52 and a horizontal support unit 54 for supporting the horizontal stage 52 so that the stage 52 is always in a horizontal position.

In FIG.6, the forward anemometer 20 is attached to the nacelle 12 via the attitude maintaining unit 50. However, this is not limitative and the forward anemometer 20 may be attached to a place other than the nacelle 12. For instance, it may be attached to the tower 14 via the attitude maintaining unit 50.

In the example illustrated in FIG.7, a six-axis motion base is used as the horizontal support unit 54 of the attitude maintaining unit 50 so as to maintain the stage 52 in the horizontal position by means of the six-axis motion base.

Herein, the six-axis motion base is provided with six linear actuators (55-1 to 55-6) such as hydraulic cylinders and electric cylinders, and is capable of six-axis motion including shifting in XYZ direction and rotation around XYZ axes by independently controlling each of the linear actuators 55. A stroke amount of each linear actuator 55 of the six-axis motion base is adjusted by feedback control based on a shifting amount of the stage 52 in XYZ directions the rotation amount of the stage 52 about XYZ axes that are detected by the six-axis motion sensor 56 attached to the stage 52. As a result, it is possible to always maintain the stage 52 in the horizontal position.

Further, the six-axis motion sensor 56 attached to the stage 52 may also function as the sensor 30, 34 for measuring the displacement and inclination amount of the forward anemometer 20.

In the example illustrated in FIG.8, elastic members 58 and dampers 59 for suspending the stage 52 from the nacelle 12 are used as the horizontal support unit 54 of the attitude maintaining unit 50. As the elastic members 58 are provided, the stage 52 can be maintained in the horizontal position by retraction and extraction of the elastic member 58 even when the nacelle 12 inclines. Further, as the dampers 59 are provided, vibration of the stage 52 is suppressed and the stage 52 can be maintained in the horizontal position in a stable manner. FIG.8 shows two sets of the elastic member 58 and the damper 59 but in reality, there are at least three sets of the elastic member 58 and the damper 59 to suspend the stage 52 from the nacelle 12.

The stage 52 is suspended from the nacelle 12 by the horizontal support unit 54 formed by the elastic member 58 and the damper 59. However, this is not limitative and the stage 52 may be attached to the top part of the tower 14 so as to be suspended. Further, instead of suspending the stage 52 from the nacelle 12 or the top part of the tower 14, the stage 52 may be installed to the nacelle 12 or the top part of the tower 14 via the horizontal support unit 54 formed by the elastic member 58 and the damper 59.

The above structure of attitude maintaining unit 50 is simple compared to the structure using the actuators 55 as illustrated in FIG.7. This contributes to reduction of the manufacturing cost as well as significant reduction of failure frequency of the attitude maintaining unit 50.

It is now described how to determine the forward position where the wind speed is actually measured according to this embodiment.

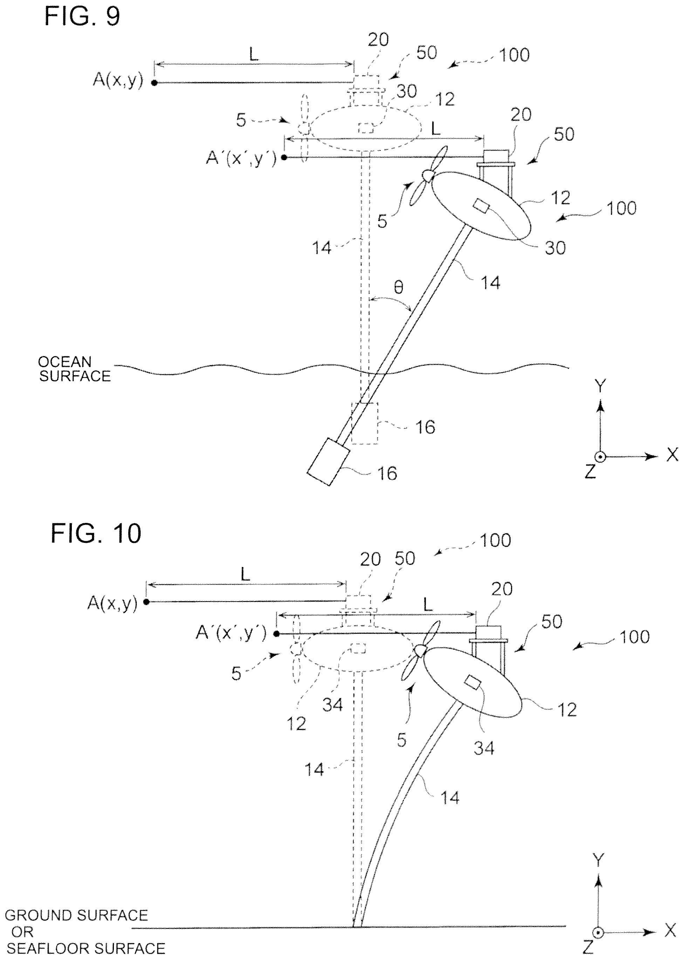

FIG.9 is an explanatory diagram of how to determine the forward position where the wind speed is actually measured by the forward anemometer 20 in the case of an offshore floating wind turbine. FIG.10 is an explanatory diagram of how to determine the forward position where the wind speed is actually measured by the forward anemometer 20 in the case of an onshore wind turbine or an offshore fixed-foundation wind turbine.

In the case of the offshore floating wind turbine, as illustrated in FIG.9, the constant attitude of the forward anemometer 20 is maintained by the attitude maintaining unit 50 even when the tower 14 is inclined at θ degrees as illustrated in FIG.9. Thus, the measuring direction (the measurement angle) of the forward anemometer 20 never changes. Further, similarly to the first embodiment, by integrating the acceleration measured by the acceleration sensor 30, the displacement of the forward anemometer 20 can be obtained. Therefore, the position of the forward position A' where the wind speed is actually measured can be determined based on the displacement of the forward anemometer 20.

In the case of the onshore wind turbine or the offshore fixed-foundation wind turbine, the constant attitude of the forward anemometer 20 is maintained by the attitude maintaining unit 50 even when the tower 14 is deflected as illustrated in FIG.10. Therefore, the measuring direction of the forward anemometer never changes. Similarly to the first embodiment, by integrating the acceleration measured by the acceleration sensor 34, the displacement of the forward anemometer 20 can be obtained. Therefore, the position of the forward position A' where the wind speed is actually measured can be determined based on the displacement of the forward anemometer 20.

In FIG.9 and FIG.10, the displacement of the forward anemometer 20 is calculated by integrating the acceleration measured by the acceleration sensor 30, 34. However, this is not limitative and any sensor may be used instead of the acceleration sensor 30, 34. For instance, a GPS receiver may be used to measure the displacement of the forward anemometer 20 in XYZ directions.

Alternatively, instead of obtaining the displacement of the forward anemometer 20 in XYZ direction from the measurement result of the sensors, periodic displacement of the forward anemometer 20 may be measured in advance and the displacement of the forward anemometer 20 may be estimated from the known periodic displacement.

As described above, in this embodiment, the forward position A' where the wind speed is actually measured is determined based on at least the displacement of the forward anemometer 20 and based on measurement result regarding the wind speed and the determined forward position A', the operation control of the wind turbine generator 1 is performed.

As a result, even when the forward anemometer 20 is displaced, it is still possible to effectively enjoy benefits of the operation control performed based on the wind speed V at the forward position A'.

Further, in this embodiment, the attitude maintaining unit 50 is used to maintain the constant attitude of the forward anemometer 20 regardless of displacement of the forward anemometer 20. Therefore, the measuring direction of the forward anemometer 20 never changes and thus, it is possible to determine the forward position A' with higher precision solely based on the displacement of the forward anemometer 20.

Differently from the case where the attitude of the forward anemometer 20 possibly changes, the measuring direction of the forward anemometer 20 never changes. The detection error of displacement of the forward anemometer 20 dominates error in determining the forward position A' where the wind speed is actually measured. Therefore, the forward measurement position A' where the wind speed is actually measured can be determined with high precision and it is possible to enjoy benefits of the operation control performed based on the wind speed at the forward position more effectively.

### (THIRD EMBODIMENT)

The wind turbine generator according to a third embodiment is described below. In this embodiment, a forward anemometer whose measurement angle and measuring distance is adjustable is used to measure the wind speed always at the same forward position and based on the wind speed measured at the same forward position, the operation control of the wind turbine generator is performed.

Herein, the same reference numerals are given without adding explanations for those configurations that are the same as the wind turbine generator 1 of the first embodiment and mainly the configurations that are different are from the wind turbine generator 1 are mainly explained.

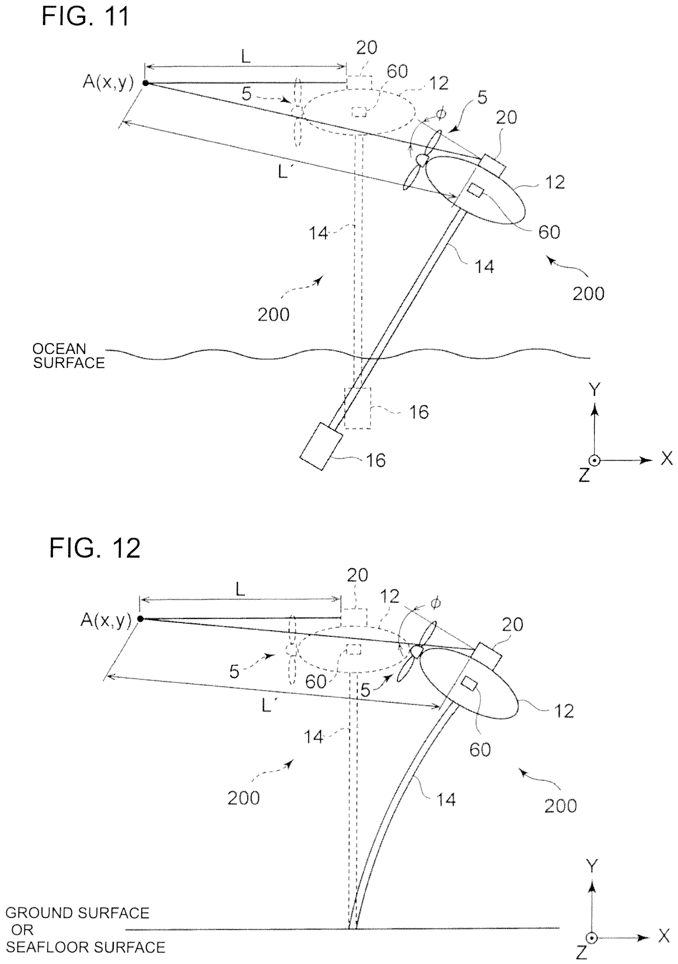

FIG.11 and FIG.12 are illustrations of a general structure of a wind turbine generator according to the third embodiment. FIG.11 illustrates the case where the wind turbine generator is an offshore floating wind turbine. FIG.12 illustrates the case where the wind turbine generator is an onshore wind turbine or an offshore fixed-foundation wind turbine.

As illustrated in FIG.11 and FIG.12, a wind turbine generator 200 is provided with a six-axis motion sensor 60 attached to the nacelle 12. The displacement in XYZ directions and the rotation amount about XYZ axes are measured by the six-axis motion sensor 60. From this measurement result, a measuring distance L' of the forward anemometer and a measurement angle *φ* is obtained for maintaining a constant measurement position. The measuring distance L' and the measurement angle *φ* are used to control the forward anemometer 20.

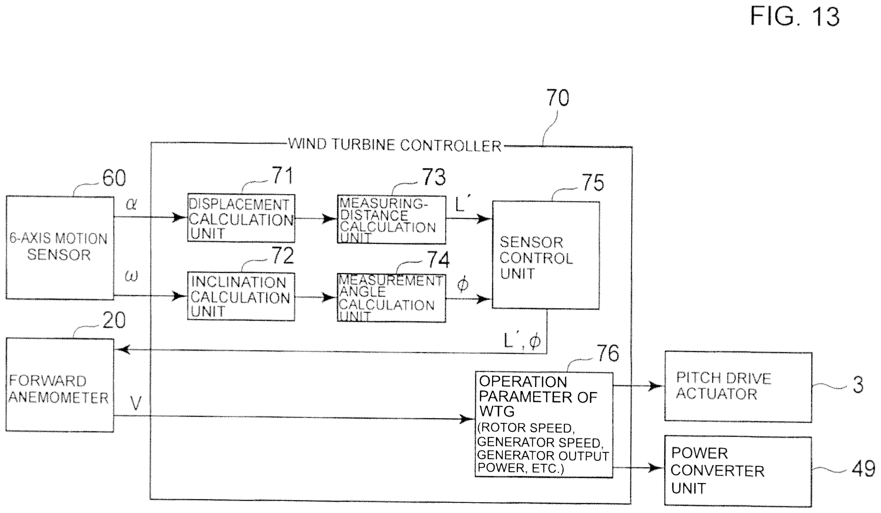

FIG. 13 is a block diagram illustrating the operation control of the wind turbine generator 200. As illustrated in the drawing, the measurement result of the six-axis motion sensor 60 is sent to the wind turbine controller 70 and used for the operation control of the wind turbine generator 200.

More specifically, acceleration α in XYZ directions (acceleration of the nacelle 12) measured by the six-axis motion sensor 60 is sent to a displacement calculation unit 71 of a wind turbine controller 70 and the displacement of the forward anemometer 20 is calculated in a displacement calculation unit 71. The angular speed ω (the angular speed of the nacelle 12) about XYZ axes measured by the six-axis motion sensor 60 is sent to an inclination calculation unit 72 of the wind turbine controller 70 and in the inclination calculation unit 72, the inclination amount of the forward anemometer 20 is calculated. The inclination amount of the forward anemometer 20 means a rotation angle of the forward anemometer 20 about XYZ axes relative to the standard state indicated by a broken line in FIG.11 or FIG.12.

A measuring-distance calculation unit 73 of the wind turbine controller 70 is configured to calculate the measuring distance L' for maintaining the constant measurement position where the wind speed is measured, based on the displacement of the forward anemometer 20 obtained by the displacement calculation unit 71. Further, a measurement-angle calculation unit 74 of the wind turbine controller 70 is configured to obtain the measurement angle *φ* for maintaining the constant measurement position where the wind speed is measured, based on the inclination amount of the forward anemometer 20 obtained by the inclination calculation unit 72. The measuring distance L' and the measurement angle *φ* obtained in this manner are used as command values for the control of the forward anemometer 20 performed by a sensor control unit 75.

The sensor control unit 75 of the wind turbine controller 70 controls the forward anemometer 20 so as to achieve the measuring distance L' and the measurement angle ϕ. More specifically, in the case where the forward anemometer 20 is LIDAR, the sensor control unit 75 adjusts a focal distance and a laser-beam irradiation direction of the forward anemometer (LIDAR) 20. As a result, the wind speed at the same measurement position A is always measured by the forward anemometer 20.

Then, an operation control unit 76 of the wind turbine controller 70 performs the operation control of the wind turbine generator 1 based on the wind speed V measured by the forward anemometer 20. More specifically, the operation control unit 76 may control the actuator 3 based on the wind speed V at the forward position A, before the wind reaches the rotor 5, so as to adjust the pitch angle of each blade 2 independently. Alternatively, the operation control unit 76 may control operation of the wind turbine generator 200 based on the wind speed V at the forward position A, before the wind reaches the rotor 5, so as to rotate the rotor 5 at the rotation speed at which the desired power coefficient Cp can be obtained. Further, to control the rotation speed of the rotor 5, the torque of the generator 10 may be adjusted by controlling the power converter unit 49 (AC-DC-AC converter) provided between the generator 10 and the grid.

As described above, in this embodiment, the forward position A where the wind speed is measured is maintained constant. Thus, even when the forward anemometer 20 is displaced, it is still possible to effectively enjoy benefits of the operation control performed based on the wind speed at the forward position.

While the embodiments of the present invention have been described, it is obvious to those skilled in the art that various changes may be made without departing from the scope of the invention.

For instance, in the above embodiments, the wind speed is measured in a plurality of regions in the circular measurement area 22 (see F1G.1) by means of the forward anemometer 20. However, this is not limitative and the measurement area where the wind speed is measured by the forward anemometer 20 may be smaller.

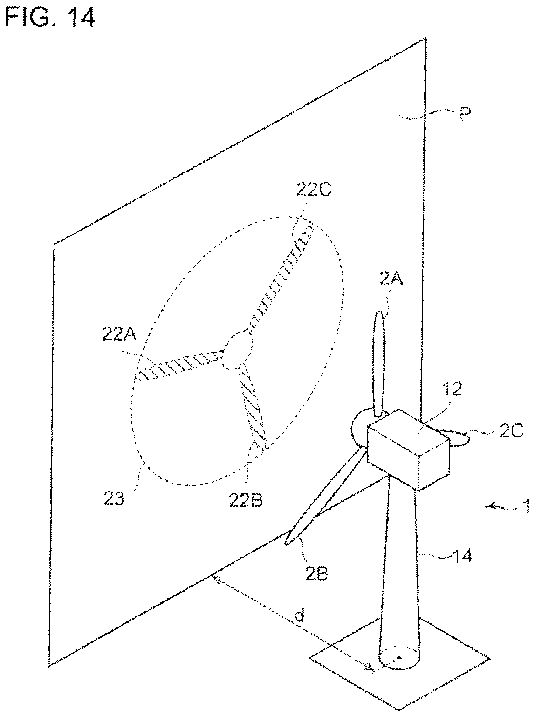

FIG. 14 is an illustration of an example of the measurement area where the wind speed measurement is performed by the forward anemometer 20. In the drawing, the plane P faces the rotor rotation plane with distance d from the wind turbine generator 1.

The measurement area 22 of the forward anemometer 20 may be regions 22A-22C at the position (the measurement position) with distance d ahead of the wind turbine generator 1 as illustrated in FIG.14. Herein, the regions 22A-22C within the plane P correspond to the blades 2A-2C, respectively and are set so as to be able to obtain minimum wind speed information needed to perform the operation control of the wind turbine generator 1 based on future wind speed. For instance, the region 22A-22C may be where the wind which will eventually hit each blade 2A-2C passes through at the measurement position. Further, the wind speed may be measured by the forward anemometer 20 only in an important section of each region 22A-22C (e.g. a section corresponding to near a tip part of each blade 22A-22C).

Furthermore, the regions 22A-22C changes from moment to moment in response to rotation of the rotor 5. Thus, the regions 22A-22C in the measurement area 22 are set every time the wind speed is measured by the forward anemometer, in consideration of the wind speed of the rotor 5 and the distance d.

Moreover, the measurement area 22 may be set by a sensor control unit (not shown) provided in the wind turbine controller 40, 70. More specifically, the forward anemometer 20 may be configured to selectively measure the wind speed in the regions 22A-22C at the forward position under control of the sensor control unit, the regions corresponding to the blades 2A-2C.

As described above, instead of setting the entire circular region 23 corresponding to the rotor rotation plane as the measurement area 22, the regions 22A-22C selected from the circular region 23 in the circumferential direction is set as the measurement area 22. As a result, the wind speed needed for the operation control of the wind turbine generator 1 can be measured with fewer samplings of the forward anemometer 20. Therefore, even in the case where the sampling period of the forward anemometer 20 is short, it is possible to effectively enjoy benefits of the operation control performed based on the wind speed measured at the forward position.

### [Reference Signs list]

- 1: WIND TURBINE GENERATOR
- 2: BLADE
- 3: PITCH DRIVE ACTUATOR
- 4: HUB (ROTOR HEAD)
- 6: MAIN SHAFT
- 7: MAIN SHAFT BEARING
- 8: GEARBOX
- 9: OUTPUT SHAFT
- 10: GENERATOR
- 12: NACELLE
- 14: TOWER
- 16: FLOATING STRUCTURE
- 20: FORWARD ANEMOMETER
- 30: FIRST ACCELERATION SENSOR
- 32: SECOND ACCELERATION SENSOR
- 40: WIND TURBINE CONTROLLER
- 42: DISPLACEMENT CALCULATION UNIT
- 44: MEASURING-DIRECTION CALCULATION UNIT
- 46: MEASUREMENT-POSITION DETERMINATION UNIT
- 48: OPERATION CONTROL UNIT
- 49: POWER CONVERTER UNIT
- 50: ATTITUDE MAINTAINING UNIT
- 52: STAGE
- 54: HORIZONTAL SUPPORT UNIT
- 55: LINEAR ACTUATORS
- 56: SIX-AXIS MOTION SENSOR
- 58: ELASTIC MEMBER
- 59: DAMPER
- 60: SIX-AXIS MOTION SENSOR
- 70: WIND TURBINE CONTROLLER
- 71: DISPLACEMENT CALCULATION UNIT
- 72: INCLINATION CALCULATION UNIT
- 73: MEASURING-DISTANCE CALCULATION UNIT
- 74: MEASUREMENT ANGLE CALCULATION UNIT
- 75: SENSOR CONTROL UNIT
- 76: OPERATION CONTROL UNIT
- 100: WIND TURBINE GENERATOR
- 200: WIND TURBINE GENERATOR

## Claims

1. An operation control method for a wind turbine generator (1) comprising a forward anemometer (20), the method comprising steps of:
measuring a wind speed at a forward position (A') distant from the wind turbine generator (1) by means of the forward anemometer (20);
determining, based on at least displacement of the forward anemometer (20) due to at least one of deformation, movement or inclination of the wind turbine generator (1) with respect to a standard state of the wind turbine generator (1), the forward position (A') at which the wind speed is actually measured by the forward anemometer (20); and
controlling the wind turbine generator (1) based on the measured wind speed and the determined forward position (A').

2. The operation control method for the wind turbine generator according to claim 1,
wherein, in the step of determining the forward position, the forward position (A,A') is determined based on the displacement of the forward anemometer (20) and a measuring direction of the forward anemometer (20).

3. The operation control method for the wind turbine generator according to claim 2,
wherein the wind turbine generator (1) is an offshore floating wind turbine, and
wherein the operation control method further comprises a step of determining the measuring direction of the forward anemometer (20) based on an inclination angle (θ) of a tower (14) of the wind turbine generator (1) relative to a vertical direction.

4. The operation control method for the wind turbine generator according to claim 2, further comprising steps of:
measuring an inclination amount of the forward anemometer (20) by means of an angular speed sensor; and
obtaining the measuring direction of the forward anemometer (20) from the inclination amount of the forward anemometer.

5. The operation control method for the wind turbine generator according to claim 1,
wherein an attitude of the forward anemometer (20) is maintained constant regardless of the displacement of the forward anemometer (20).

6. The operation control method for the wind turbine generator according to any one of claims 1 to 5,
wherein the displacement of the forward anemometer (20) is obtained from a detection result of a displacement detection unit including an acceleration sensor (30,34) or a GPS receiver.

7. The operation control method for the wind turbine generator according to any one of claims 1 to 5,
wherein the displacement of the forward anemometer (20) is estimated from a known periodic displacement of the forward anemometer (20).

8. The operation control method for the wind turbine generator according to any one of claims 1 to 7,
wherein, in the step of measuring the wind speed, the wind speed in a region (22A-22C) at the forward position (A,A') is selectively measured, the region (22A-22C) corresponding to a blade (2) of the wind turbine generator (1).

9. A wind turbine generator (1) comprising:
a forward anemometer (20) for measuring a wind speed at a forward position (A') distant from the wind turbine generator (1);
a measurement-position determination unit (46) for determining, based on at least displacement of the forward anemometer (20) due to at least one of deformation, movement or inclination of the wind turbine generator (1) with respect to a standard state of the wind turbine generator (1), the forward position (A') where the wind speed is actually measured by the forward anemometer (20); and
an operation control unit (48) for controlling the wind turbine generator (1) based on the wind speed measured by the forward anemometer (20) and the forward position (A') determined by the measurement-position determination unit (46).

10. The wind turbine generator according to claim 9,
wherein the measurement-position determination unit (46) is configured to determine the forward position (A,A'), based on the displacement of the forward anemometer (20) and a measuring direction of the forward anemometer (20).

11. The wind turbine generator according to claim 10,
wherein the wind turbine generator (1) is an offshore floating wind turbine comprising a nacelle (12) provided on a tower (14) supported by a floating structure(16), and
wherein the wind turbine generator (1) further comprises:
a pair of acceleration sensors (30,32) provided in at least one of the floating structure (16), the tower (14) or the nacelle (12), the pair of acceleration sensors (30,32) being arranged at different heights; and
a measuring-direction calculation unit (44) for calculating the measuring direction of the forward anemometer (20) from a measurement result of the pair of acceleration sensors (30,32).

12. The wind turbine generator according to claim 10, further comprising:
an angular speed sensor for measuring an inclination amount (θ) of the forward anemometer (20); and
a measuring-direction calculation unit (44) for calculating the measuring direction of the forward anemometer (20) from a measurement result of the angular speed sensor.

13. The wind turbine generator according to claim 9, further comprising:
an attitude maintaining unit (50) for maintaining an attitude of the forward anemometer (20) regardless of the displacement of the forward anemometer (20).

14. The wind turbine generator according to any one of claims 9 to 13, further comprising:
a displacement detection unit for detecting the displacement of the forward anemometer (20), the displacement detection unit including an acceleration sensor (30,34) or a GPS receiver.

15. The wind turbine generator according to any one of claims 9 to 13, further comprising:
a memory unit for storing a periodic displacement of the forward anemometer (20) in advance,
wherein the displacement of the forward anemometer (20) is estimated from the periodic displacement stored in the memory unit.

16. The wind turbine generator according to any one of claims 9 to 15, further comprising:
a blade (2); and
an anemometer controller for controlling the forward anemometer (20) so as to selectively measure a wind speed in a region (22A-22C) at the forward position (A,A'), the region (22A-22C) corresponding to the blade (2).

17. A method for controlling a wind turbine generator (1) according to claim 1 comprising steps of:
maintaining the forward position (A,A') where the wind speed is measured constant regardless of the displacement of the forward anemometer (20); and
controlling the wind turbine generator (1) based on the measured wind speed.

18. A wind turbine generator (1) according to claim 9 comprising:
an operation control unit (48) for controlling operation of the wind turbine generator (1) based on the wind speed measured by the forward anemometer (20),
wherein the forward position (A,A') where the wind speed is measured by the forward anemometer (20) is maintained constant regardless of the displacement of the forward anmometer (20).

## Patentansprüche

1. Betriebssteuerungsverfahren für eine Windkraftanlage (1), die einen Vorwärtswindmesser (20) umfasst, wobei das Verfahren folgende Schritte umfasst:
Messen einer Windgeschwindigkeit an einer Vorwärtsposition (A'), die sich in einem Abstand von der Windkraftanlage (1) auf, mittels des Vorwärtswindmessers (20),
Bestimmen der Vorwärtsposition (A'), an der die Windgeschwindigkeit tatsächlich durch den Vorwärtswindmesser (20) gemessen wird, basierend zumindest auf einer Positionsveränderung des Vorwärtswindmessers (20) aufgrund mindestens einer von Verformung, Bewegung oder Neigung der Windkraftanlage (1) mit Bezug auf einen Standardzustand der Windkraftanlage (1), und
Steuern der Windkraftanlage (1) basierend auf der gemessenen Windgeschwindigkeit und der bestimmten Vorwärtsposition (A').

2. Betriebssteuerungsverfahren für die Windkraftanlage nach Anspruch 1, wobei in dem Schritt des Bestimmens der Vorwärtsposition die Vorwärtsposition (A, A') basierend auf Positionsveränderung des Vorwärtswindmessers (20) und einer Messrichtung des Vorwärtswindmessers (20) bestimmt wird.

3. Betriebssteuerungsverfahren für die Windkraftanlage nach Anspruch 2,
wobei die Windkraftanlage (1) eine schwimmende Offshore-Windturbine ist und
wobei das Betriebssteuerungsverfahren ferner einen Schritt des Bestimmens der Messrichtung des Vorwärtswindmessers (20) anhand eines Neigungswinkels (θ) eines Mastes (14) der Windkraftanlage (1) relativ zu einer vertikalen Richtung umfasst.

4. Betriebssteuerungsverfahren für die Windkraftanlage nach Anspruch 2, ferner umfassend Schritte des:
Messens eines Neigungsbetrages des Vorwärtswindmessers (20) mittels eines Winkelgeschwindigkeitssensors und
Erhaltens der Messrichtung des Vorwärtswindmessers (20) aus dem Neigungsbetrag des Vorwärtswindmessers.

5. Betriebssteuerungsverfahren für die Windkraftanlage nach Anspruch 1,
Anstellwinkel des Vorwärtswindmessers (20) ungeachtet der Positionsveränderung des Vorwärtswindmessers (20) konstant gehalten wird.

6. Betriebssteuerungsverfahren für die Windkraftanlage nach einem der Ansprüche 1 bis 5,
wobei die Positionsveränderung des Vorwärtswindmessers (20) aus einem Detektionsergebnis einer Positionsveränderungsdetektionseinheit erhalten wird, die einen Beschleunigungssensor (30, 34) oder einen GPS-Empfänger enthält.

7. Betriebssteuerungsverfahren für die Windkraftanlage nach einem der Ansprüche 1 bis 5,
wobei die Positionsveränderung des Vorwärtswindmessers (20) anhand einer bekannten periodischen Positionsveränderung des Vorwärtswindmessers (20) geschätzt wird.

8. Betriebssteuerungsverfahren für die Windkraftanlage nach einem der Ansprüche 1 bis 7,
wobei in dem Schritt des Messens der Windgeschwindigkeit die Windgeschwindigkeit in einer Region (22A-22C) an der Vorwärtsposition (A, A') selektiv gemessen wird, wobei die Region (22A-22C) einem Flügel (2) der Windkraftanlage (1) entspricht.

9. Windkraftanlage (1), umfassend:
einen Vorwärtswindmesser (20) zum Messen einer Windgeschwindigkeit an einer Vorwärtsposition (A'), die sich in einem Abstand von der Windkraftanlage (1) befindet;
eine Messpositionsbestimmungseinheit (46) zum Bestimmen der Vorwärtsposition (A'), wo die Windgeschwindigkeit durch den Vorwärtswindmesser (20) tatsächlich gemessen wird, mindestens anhand einer Positionsveränderung des Vorwärtswindmessers (20) basierend zumindest auf einer von Verformung, Bewegung oder Neigung der Windkraftanlage (1) mit Bezug auf einen Standardzustand der Windkraftanlage (1), und
eine Betriebssteuerungseinheit (48) zum Steuern der Windkraftanlage (1) anhand der durch den Vorwärtswindmesser (20) gemessenen Windgeschwindigkeit und der durch die Messpositionsbestimmungseinheit (46) bestimmten Vorwärtsposition (A').

10. Windkraftanlage nach Anspruch 9,
wobei die Messpositionsbestimmungseinheit (46) dafür konfiguriert ist, die Vorwärtsposition (A, A'), basierend auf der Positionsveränderung des Vorwärtswindmessers (20) und einer Messrichtung des Vorwärtswindmessers (20) zu bestimmen.

11. Windkraftanlage nach Anspruch 10,
wobei die Windkraftanlage (1) eine schwimmende Offshore-Windturbine ist, die eine Gondel (12) umfasst, die auf einem Mast (14) angeordnet ist, der durch eine schwimmende Struktur (16) getragen wird, und
wobei die Windkraftanlage (1) ferner umfasst:
ein Paar Beschleunigungssensoren (30, 32), die in mindestens einem der schwimmenden Struktur (16), des Mastes (14) oder der Gondel (12) angeordnet ist, wobei das Paar Beschleunigungssensoren (30, 32) auf verschiedenen Höhen angeordnet ist, und
eine Messrichtungsberechnungseinheit (44) zum Berechnen der Messrichtung des Vorwärtswindmessers (20) anhand eines Messergebnisses des Paares Beschleunigungssensoren (30, 32).

12. Windkraftanlage nach Anspruch 10, ferner umfassend:
einen Winkelgeschwindigkeitssensor zum Messen eines Neigungsbetrages (θ) des Vorwärtswindmessers (20), und
eine Messrichtungsberechnungseinheit (44) zum Berechnen der Messrichtung des Vorwärtswindmessers (20) anhand eines Messergebnisses des Winkelgeschwindigkeitssensors.

13. Windkraftanlage nach Anspruch 9, ferner umfassend:
Anstellwinkelbeibehaltungseinheit (50), um einen Anstellwinkel des Vorwärtswindmessers (20) ungeachtet der Positionsveränderung des Vorwärtswindmessers (20) beizubehalten.

14. Windkraftanlage nach einem der Ansprüche 9 bis 13, ferner umfassend:
eine Positionsveränderungsdetektionseinheit zum Detektieren der Positionsveränderung des Vorwärtswindmessers (20), wobei die Positionsveränderungsdetektionseinheit einen Beschleunigungssensor (30, 34) oder einen GPS-Empfänger enthält.

15. Windkraftanlage nach einem der Ansprüche 9 bis 13, ferner umfassend:
eine Speichereinheit zum Speichern einer periodischen Positionsveränderung des Vorwärtswindmessers (20) im Voraus,
wobei die Positionsveränderung des Vorwärtswindmessers (20) anhand der in der Speichereinheit gespeicherten periodischen Positionsveränderung geschätzt wird.

16. Windkraftanlage nach einem der Ansprüche 9 bis 15, ferner umfassend:
einen Flügel (2) und
eine Windmessersteuereinheit zum Steuern des Vorwärtswindmessers (20) dergestalt, dass eine Windgeschwindigkeit in einer Region (22A-22C) an der Vorwärtsposition (A, A') selektiv gemessen wird, wobei die Region (22A-22C) dem Flügel (2) entspricht.

17. Verfahren zum Steuern einer Windkraftanlage (1) nach Anspruch 1, umfassend Schritte des:
Konstanthaltens der Vorwärtsposition (A, A'), wo die Windgeschwindigkeit gemessen wird, ungeachtet der Positionsveränderung des Vorwärtswindmessers (20), und
Steuerns der Windkraftanlage (1) basierend auf gemessenen Windgeschwindigkeit.

18. Windkraftanlage (1) nach Anspruch 9, umfassend:
eine Betriebssteuerungseinheit (48) zum Steuern des Betriebes der Windkraftanlage (1) basierend auf der durch den Vorwärtswindmesser (20) gemessenen Windgeschwindigkeit,
wobei die Vorwärtsposition (A, A'), wo die Windgeschwindigkeit durch den Vorwärtswindmesser (20) gemessen wird, ungeachtet der Positionsveränderung des Vorwärtswindmessers (20) konstant gehalten wird.

## Revendications

1. Procédé de commande de fonctionnement pour une génératrice d'éolienne (1) comprenant un anémomètre avant (20), le procédé comprenant les étapes consistant à :
mesurer la vitesse du vent dans une position avant (A') à distance de la génératrice d'éolienne (1) au moyen de l'anémomètre avant (20) ;
déterminer, sur la base au moins du déplacement de l'anémomètre avant (20) dû à au moins l'un parmi la déformation, le mouvement ou l'inclinaison de la génératrice d'éolienne (1) par rapport à un état standard de la génératrice d'éolienne (1), la position avant (A') à laquelle la vitesse du vent est réellement mesurée par l'anémomètre avant (20) ; et
commander la génératrice d'éolienne (1) sur la base de la vitesse du vent mesurée et de la position avant (A') déterminée.

2. Procédé de commande de fonctionnement pour une génératrice d'éolienne selon la revendication 1,
dans lequel, à l'étape de détermination de la position avant, la position avant (A, A') est déterminée sur la base du déplacement de l'anémomètre avant (20) et d'une direction de mesure de l'anémomètre avant (20).

3. Procédé de commande de fonctionnement pour une génératrice d'éolienne selon la revendication 2,
dans lequel la génératrice d'éolienne (1) est une éolienne flottante en mer, et
dans lequel le procédé de commande de fonctionnement comprend en outre une étape consistant à déterminer la direction de mesure de l'anémomètre avant (20) sur la base d'un angle d'inclinaison (θ) d'une tour (14) de la génératrice d'éolienne (1) par rapport à une direction verticale.

4. Procédé de commande de fonctionnement pour une génératrice d'éolienne selon la revendication 2, comprenant en outre les étapes consistant à :
mesurer une quantité d'inclinaison de l'anémomètre avant (20) au moyen d'un capteur de vitesse angulaire ; et
obtenir la direction de mesure de l'anémomètre avant (20) de la quantité d'inclinaison de l'anémomètre avant.

5. Procédé de commande de fonctionnement pour une génératrice d'éolienne selon la revendication 1,
dans lequel une attitude de l'anémomètre avant (20) est maintenue constante indépendamment du déplacement de l'anémomètre avant (20).

6. Procédé de commande de fonctionnement pour une génératrice d'éolienne selon l'une quelconque des revendications 1 à 5,
dans lequel le déplacement de l'anémomètre avant (20) est obtenu à partir d'un résultat de détection d'une unité de détection de déplacement comprenant un capteur d'accélération (30, 34) ou un récepteur GPS.

7. Procédé de commande de fonctionnement pour une génératrice d'éolienne selon l'une quelconque des revendications 1 à 5,
dans lequel le déplacement de l'anémomètre avant (20) est estimé à partir d'un déplacement périodique connu de l'anémomètre avant (20).

8. Procédé de commande de fonctionnement pour une génératrice d'éolienne selon l'une quelconque des revendications 1 à 7,
dans lequel, à l'étape consistant à mesurer la vitesse du vent, la vitesse du vent dans une région (22A - 22C), dans la position avant (A, A'), est sélectivement mesurée, la région (22A - 22C) correspondant à une pale (2) de la génératrice d'éolienne (1).

9. Génératrice d'éolienne (1) comprenant :
un anémomètre avant (20) pour mesurer la vitesse du vent dans une position avant (A') à distance de la génératrice d'éolienne (1) ;
une unité de détermination de position de mesure (46) pour déterminer, sur la base au moins du déplacement de l'anémomètre avant (20) dû à au moins l'un parmi la déformation, le mouvement ou l'inclinaison de la génératrice d'éolienne (1) par rapport à un état standard de la génératrice d'éolienne (1), la position avant (A') où la vitesse du vent est réellement mesurée par l'anémomètre avant (20) ; et
une unité de commande de fonctionnement (48) pour commander la génératrice d'éolienne (1) sur la base de la vitesse du vent mesurée par l'anémomètre avant (20) et la position avant (A') déterminée par l'unité de détermination de position de mesure (46).

10. Génératrice d'éolienne selon la revendication 9,
dans laquelle l'unité de détermination de position de mesure (46) est configurée pour déterminer la position avant (A, A'), sur la base du déplacement de l'anémomètre avant (20) et d'une direction de mesure de l'anémomètre avant (20).

11. Génératrice d'éolienne selon la revendication 10,
dans laquelle la génératrice d'éolienne (1) est une éolienne flottante en mer comprenant une nacelle (12) prévue sur une tour (14) supportée par une structure flottante (16), et
dans laquelle la génératrice d'éolienne (1) comprend en outre :
une paire de capteurs d'accélération (30, 32) prévue dans au moins l'une parmi la structure flottante (16), la tour (14) ou la nacelle (12), la paire de capteurs d'accélération (30, 32) étant agencée à différentes hauteurs ; et
une unité de calcul de direction de mesure (44) pour calculer la direction de mesure de l'anémomètre avant (20) à partir d'un résultat de mesure de la paire de capteurs d'accélération (30, 32).

12. Génératrice d'éolienne selon la revendication 10, comprenant en outre :
un capteur de vitesse angulaire pour mesurer une quantité d'inclinaison (θ) de l'anémomètre avant (20) ; et
une unité de calcul de direction de mesure (44) pour calculer la direction de mesure de l'anémomètre avant (20) à partir d'un résultat de mesure du capteur de vitesse angulaire.

13. Génératrice d'éolienne selon la revendication 9, comprenant en outre :
une unité de maintien d'attitude (50) pour maintenir une attitude de l'anémomètre avant (20) indépendamment du déplacement de l'anémomètre avant (20).

14. Génératrice d'éolienne selon l'une quelconque des revendications 9 à 13, comprenant en outre :
une unité de détection de déplacement pour détecter le déplacement de l'anémomètre avant (20), l'unité de détection de déplacement comprenant un capteur d'accélération (30, 34) ou un récepteur GPS.

15. Génératrice d'éolienne selon l'une quelconque des revendications 9 à 13, comprenant en outre :
une unité de mémoire pour stocker un déplacement périodique de l'anémomètre avant (20) à l'avance,
dans laquelle le déplacement de l'anémomètre avant (20) est estimé à partir du déplacement périodique stocké dans l'unité de mémoire.

16. Génératrice d'éolienne selon l'une quelconque des revendications 9 à 15, comprenant en outre :
une pale (2) ; et
un organe de commande d'anémomètre pour commander l'anémomètre avant (20) afin de mesurer sélectivement la vitesse du vent dans une région (22A - 22C) dans la position avant (A, A'), la région (22A - 22C) correspondant à la pale (2).

17. Procédé pour commander une génératrice d'éolienne (1) selon la revendication 1, comprenant les étapes consistant à :
maintenir la position avant (A, A'), dans laquelle la vitesse du vent est mesurée, constante indépendamment du déplacement de l'anémomètre avant (20) ; et
commander la génératrice d'éolienne (1) sur la base de la vitesse du vent mesurée.

18. Génératrice d'éolienne (1) selon la revendication 9, comprenant :
une unité de commande de fonctionnement (48) pour commander le fonctionnement de la génératrice d'éolienne (1) sur la base de la vitesse du vent mesurée par l'anémomètre avant (20),
dans laquelle la position avant (A, A'), dans laquelle la vitesse du vent est mesurée par l'anémomètre avant (20), est maintenue constante indépendamment du déplacement de l'anémomètre avant (20).
